# EUROPÄISCHE PATENTANMELDUNG

(11) **EP 2 322 949 A1**
(43) Veröffentlichungstag der Anmeldung: **18.05.2011**
(21) Anmeldenummer: 10014395.7
(22) Anmeldetag: 09.11.2010
(51) Int. Cl.: G01S 7/41, G01S 13/72, G06K 9/00, G01S 13/88

(54) **System und Verfahren zur Überwachung von Zielobjekten**

(30) Priorität: 14.11.2009 DE 102009053395
(71) Anmelder: EADS Deutschland GmbH, 85521 Ottobrunn (DE)
(72) Erfinder: Bodenmüller, Albert, 89179 Beimerstetten (DE)
(74) Vertreter: Meel, Thomas

(57) **Zusammenfassung**

Für die Überwachung von Zielobjekten mittels einer Sensoranordnung wird zur flexiblen Auswertung von über die Sensoranordnung bestimmten ersten Zielparameter zu den verschiedenen Zielobjekten die Generierung, Abspeicherung und Überprüfung gesonderter, benutzerdefinierbarer Prüfprofile vorgeschlagen, ohne dass ein Eingriff in sicherheitsrelevante Systemkomponenten erforderlich wird. Die freie Definierbarkeit von Prüfprofilen durch einen Benutzer führt zu einer hohen Flexibilität des Systems und einer verbesserten Erkennung insbesondere von militärischen Bedrohungssituationen, terroristischen Angriffen und/oder asymmetrischen Bedrohungen auch ziviler und versorgungswesentlicher Einrichtungen durch Zielobjekte im Überwachungsraum. Aus zeitlichen Folgen erster Zielparameter können vorteilhafterweise weitere Zielparameter abgeleitet werden.

## Beschreibung

Die Erfindung betrifft ein System und ein Verfahren zur Überwachung von Zielobjekten.

Die Überwachung von Zielobjekten innerhalb eines Überwachungsbereichs mittels einer Sensoranordnung ist insbesondere als Schutzmaßnahme bei militärischen Einrichtungen gegen potentielle Angreifer von Bedeutung, aber auch in anderer Umgebung sinnvoll, wie z. B. im Zivilschutz, bei Gefahr von Terroranschlägen gegen Einrichtungen, wie Kernkraftwerke, Raffinerien sowie sogenannte asymmetrische Bedrohungen gegen Lager, Hafenanlagen oder durch Piraterie. Insbesondere von Bedeutung sind Situationen mit Flugobjekten als potentieller Bedrohung, wobei durch deren hohe Beweglichkeit schnelle Änderungen in der Gefahrenlage auftreten können und in sehr kurzer Zeit Entscheidungen über eventuelle Gegenmaßnahmen getroffen werden müssen. Sensoranordnungen zur Überwachung von Flugobjekten enthalten typischerweise eine Radaranlage, welche in einem Überwachungsbereich auftretende Zielobjekte zyklisch erfasst und dabei Zielkoordinaten als Entfernung, Azimut und Elevation sowie bei Dopplerauswertung die Radialgeschwindigkeit der Zielobjekte relativ zu der Sensoranordnung als Zielparameter bestimmt. Je nach Art der Sensoranordnung können auch andere Zielparameter in der Sensoranordnung bestimmt werden.

Aus den von der Sensoranordnung bestimmten Zielparametern kann in einer nachgeschalteten Auswerteeinrichtung eine Bewertung der erfassten Zielobjekte und eine entsprechende Ausgabe von Zielinformationen an einen Benutzer sowie erforderlichenfalls eine Einleitung von Abwehrmaßnahmen vorgenommen werden. Die in der Auswerteeinrichtung vordefinierten Bewertungsvorschriften sind aus Sicherheitsgründen durch den Benutzer an den die Ausgabe der Zielinformationen gerichtet ist, nicht veränderbar.

Eine Anpassung von Bewertungskriterien bei einer automatischen Bewertung von Zielobjekten in einem Überwachungsbereich über selbstlernende KI-Systeme oder neuronale Netzwerke erfordert typischerweise eine Trainingsphase mit einem zahlenmäßig großen Trainingsset, was mit einer Anpassung nach Vorstellung eines Benutzers in der Regel nicht in Einklang zu bringen ist.

Aus der WO 2007/145692 ist ein Verfahren zur Überwachung von Zielobjekten bekannt, bei welchem durch Spurbildung zweier Zielobjekte auch ein eventuell bedrohliches kleineres Zielobjekt, welches hinter einem ungefährlichen größeren Zielobjekt verschwindet, unter bestimmten Bedingungen einen Alarm auslösen kann.

Die US 2006/0045354 A1 beschreibt eine Videoüberwachungseinrichtung, bei welcher eine Sequenz von Bildaufnahmen eines Überwachungsbereichs zur Klassifikation von in dem Bereich detektierten Zielobjekten verarbeitet werden. Die Verarbeitung umfasst die Extraktion von Zielparametern und deren Vergleich mit gespeicherten Prüfkriterien, wobei die Prüfkriterien mehrere Merkmalsvektoren enthalten. Die Prüfkriterien können adaptiv durch Lernen oder durch Benutzereingabe in einer höheren Programmiersprache vordefiniert werden.

In der US 4 905 292 ist ein Zielerkennungssystem mit zwei unterschiedlichen Sensoren angegeben, bei welchem die Sensoren jeweils eigene Auswerteeinrichtungen zugeordnet sind und die Ausgangssignale der beiden Auswerteeinrichtungen in einer Entscheidungsstufe verknüpft sind, um Falschalarme zu verringern.

Der Erfindung liegt die Aufgabe zugrunde, ein System und ein Verfahren zur Überwachung von Zielobjekten mit höherer Flexibilität anzugeben. Erfindungsgemäße Lösungen sind in den unabhängigen Ansprüchen beschrieben. Die abhängigen Ansprüche enthalten vorteilhafte Ausgestaltungen und Weiterbildungen der Erfindung.

Die Abspeicherung von Prüfprofilen in einem Profilspeicher und der Vergleich der in den Prüfprofilen enthaltenen Prüfkriterien mit Zielparametern in einer Prüfeinrichtung erlauben die weitgehend freie Definition von Prüfprofilen ohne in den geschützten Auswertebereich des Systems ändernd einzugreifen. Insbesondere können dadurch auch einem bestehenden System weitere Prüfprofile hinzugefügt und dadurch die Überwachungs- und Erkennungsleistungen des Systems erweitert werden. Vorteilhafterweise können solche in dem Profilspeicher abspeicherbaren Prüfprofile durch den Benutzer des Systems selbst definiert, erforderlichenfalls geändert und abgespeichert werden. Profilspeicher und Prüfeinrichtung können vorteilhafterweise unabhängig von dem geschützten Auswertebereich des Systems und insbesondere auch auf einem separaten Rechner eingerichtet sein. Die von der Sensoranordnung bestimmten ersten Zielparameter können in der Prüfeinrichtung parallel zu der Auswerteeinrichtung verarbeitet werden, da als Eingriff in bestehende Systeme im wesentlichen nur die Übergabe der von der Sensoranordnung bestimmten Zielparameter an die Prüfeinrichtung und/oder eine Einrichtung zur Ableitung weiterer Zielparameter vorzusehen ist.

Vorteilhafterweise erzeugt eine nachfolgend als Trackdatenaggregator bezeichnete Einrichtung aus den ersten Zielparametern weitere Zielparameter, welche insbesondere aus einer zeitlichen Folge von ersten Zielparametern ableitbar sind. Wenn in typischer Ausführung, wie z. B. bei einer Radaranlage als Sensoranordnung, die sich aus den Sensorsignalen ergebenden ersten Zielparameter die Ortskoordinaten eines Ziels und insbesondere bei fliegenden Zielobjekten eventuell die Radialgeschwindigkeit bezüglich der Sensoranordnung enthalten, kann aus einer zeitlichen Folge dieser ersten Zielparameter zu ein und demselben Ziel ein Satz weiterer Zielparameter, insbesondere Größen der Ortsveränderung als Geschwindigkeiten und Größen der Bewegungsänderungen als kinematische weitere Zielparameter ermittelt werden. Die kinematischen weiteren Zielparameter können nach Betrag und/oder Richtung ermittelt werden. Als andere weitere Zielparameter können Durchschnittswerte oder Extremwerte, wie z. B. minimale oder maximale Höhe oder Geschwindigkeit eines Ziels über einen vorgebbaren Zeitraum oder eine vorgebbare Zahl zeitlich aufeinander folgenden ersten Zielparameter bestimmt und zusätzlich zu den ersten Zielparametern in dem Trackdatengenerator für den Vergleich mit den Prüfkriterien der gespeicherten Prüfprofile bereitgestellt werden. Die Einrichtung zum Vergleich der Prüfkriterien mit den ersten und den weiteren Zielparametern sei als Prüfeinrichtung bezeichnet.

Zeitlich aufeinander folgende Zielparameterwerte ergeben sich typischerweise bei wiederholter Erfassung desselben Ziels durch die Sensoranordnung, beispielsweise einem zyklisch azimutal geschwenkten Antennendiagramm oder einem elektronisch auf Einzelzielobjekte ausrichtbaren Antennendiagramm einer Radaranlage.

Nicht nur, aber insbesondere bei Systemen zur Überwachung von beim Lagerschutz und/oder gegen asymmetrische und/oder terroristische Bedrohung relevanten Zielobjekten, bei welchen es sich auch um Personen handeln kann, können andere Sensoren, wie Bewegungsmelder, Näherungssensoren, IR-Sensoren oder insbesondere bildgebende elektro-optische Sensoren im sichtbaren oder nicht sichtbaren Wellenlängenbereich vorteilhaft einsetzbar sein.

Vorteilhafterweise sind Prüfkriterien als Schwellwerte für erste und/oder weitere Zielparameter in den Prüfprofilen definiert bzw. durch den Benutzer definierbar. Als Schwellwertdefinition sei auch eine Bereichsdefinition durch einen oberen und einen unteren Schwellwert sowie das Vorhandensein oder Fehlen eines Werts für einen Zielparameter zu verstehen. Die Prüfkriterien können auch Verknüpfungen, insbesondere logische Verknüpfungen über OR, AND und ähnliche Boole'sche Operationen zwischen einzelnen Prüfkriterien enthalten.

Die Prüfprofile können, insbesondere unter Verwendung der vorstehend beschriebenen Schwellwertvergleiche und logischen Verknüpfungen vorteilhafterweise einfach aufgebaut sein. Durch einen solchen strukturell einfachen Aufbau der Prüfprofile können diese je nach Ausbildungsstand des Benutzers in einer einfachen Metasprache, wie z. B. HTML definierbar sein oder in bevorzugter Ausführung durch Eingabemasken über eine interaktive Eingabeeinrichtung eingebbar sein, wobei in der letzteren Ausführung vorteilhafterweise bereits bei der Eingabe Plausibilitätskontrollen automatisch durchführbar sind. Eingabemasken für vorgegebene Parametersätze sind an sich von Datenbankabfragen in vielen Variationen bekannt.

Vorteilhafterweise kann wenigstens ein Prüfprofil mit mehreren Prüfkriterien ein vorrangiges Prüfkriterium, nachfolgend als Eingangskriterium bezeichnet, enthalten, welches beim Vergleich mit den Zielparametern als erstes bearbeitet wird. Insbesondere kann ein Nicht-Erfüllt-Sein des Eingangskriteriums die weitere Bearbeitung des Prüfprofils unterbinden, so dass die Prüfeinrichtung nicht mit der Abarbeitung der weiteren Prüfkriterien dieses Prüfprofils belastet wird und das Eingangskriterium die Funktion eines Ausschlusskriteriums bildet. Ein Eingangskriterium kann auch für eine Gruppe von Prüfprofilen gemeinsam definiert sein, beispielsweise in Form eines Schwellwerts für die maximale Geschwindigkeit eines Zielobjekts für mehrere oder alle Prüfprofile, welche auf Hubschrauber als Zielobjekte ausgerichtete Prüfkriterien enthalten, wobei bei Überschreiten eines in dem Eingangskriterium definierten Maximalwert für die maximale Geschwindigkeit eines Zielobjekts die entsprechenden Prüfprofile nicht weiter in der Prüfeinrichtung auf dieses Zielobjekt angewandt werden.

Insbesondere bei der Überwachung von Zielobjekten in der Umgebung von z. B. Lagern, Kraftwerken und dergleichen als Schutzobjekten kann vorteilhafterweise ein Prüfkriterium darauf gerichtet sein, ob sich ein Zielobjekt, z. B. eine Person oder ein Land- oder Wasserfahrzeug innerhalb definierbarer Gebiete oder Zonen um ein solches Schutzobjekt befindet. In ein Prüfkriterium eingehende Zielparameter können dann z. B. die Ortskoordinaten eines Zielobjekts und gegebenenfalls dessen Bewegungsparameter sein.

Die im Profilspeicher gespeicherten Profile sind vorteilhafterweise einzeln und/oder gruppenweise durch den Benutzer aktivierbar und deaktivierbar in dem Sinne, dass nur aktivierte Prüfprofile der Prüfeinrichtung zur Bearbeitung durch Vergleich mit den Zielparametern zugeführt werden. Gespeicherte Prüfprofile sind vorteilhafterweise durch den Benutzer editierbar und in geänderter Fassung durch den Benutzer im Profilspeicher abspeicherbar. Die Möglichkeit der Aktivierung und Deaktivierung ist insbesondere auch von Vorteil bei unveränderlich vordefinierten Prüfprofilen.

Die Erfindung ermöglicht auf einfache und vorteilhafte Weise ohne Eingriff in sicherheitsrelevante Bereiche der systemeigenen Zieldatenauswertung eine nach den Vorstellungen eines erfahrenen Benutzers adaptive Ergänzung der Zielobjektüberwachung. Insbesondere können auf einfache und flexible Weise von ungefährlichen Zielobjekten abweichende Verhaltensweisen von überwachten Zielobjekten automatisch überwacht und bei erkannten Auffälligkeiten entsprechende Ausgangssignale, insbesondere optische und/oder akustische Alarmsignale generiert werden.

Die Erfindung ist nachfolgend anhand bevorzugter Ausführungsbeispiele unter Bezugnahme auf die Abbildungen noch eingehend veranschaulicht. Dabei zeigt:
- Fig. 1: einen schematischen Aufbau einer erfindungsgemäßen Einrichtung,
- Fig. 2: ein Profilprüfungsschema.

Die Erfindung ist nachfolgend anhand von Beispielen beschrieben, welche primär die Überwachung eines Überwachungsbereichs auf fliegende Zielobjekte unter Verwendung einer Radaranlage als Sensor annehmen. Die Ausführungen gelten, soweit nicht speziell an diese Annahmen gebunden, auch analog für andere Überwachungssituationen und Sensoren, insbesondere auch für Land- oder Wasserfahrzeuge und für Personen als Zielobjekte, insbesondere als terroristische oder asymmetrische Bedrohung, sowie für andere Sensoren, insbesondere elektro-optische Sensoren in der Sensoranordnung.

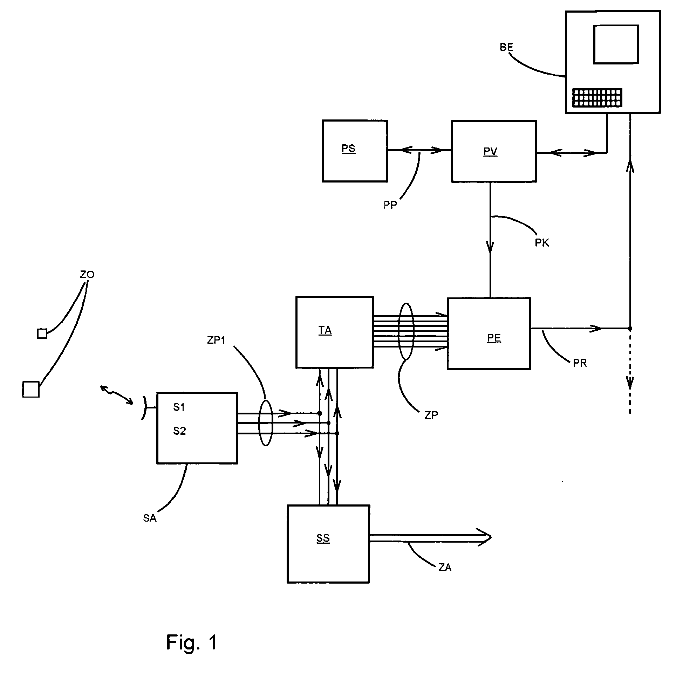

In Fig. 1 ist ein schematischer Aufbau einer erfindungsgemäßen Einrichtung mit den für die weitere Erläuterung der Erfindung wesentlichen Komponenten dargestellt.

Eine Sensoranordnung SA kann einen oder mehrere Sensoren S1, S2 enthalten, welche Zielobjekte ZO in einem Überwachungsraum erfassen und zu den einzelnen Zielobjekten erste Zielparameter ZP1 generieren. Die Sensoranordnung SA kann insbesondere als ersten Sensor eine Radaranlage enthalten, welche insbesondere Ortskoordinaten der Zielobjekte in auf den Ort der Sensoranordnung SA bezogenen Polarkoordinaten oder rechtwinkligen Koordinaten ermittelt und als erste Zielparameter ZP1 zu den einzelnen Zielobjekten ausgibt. Eine Radaranlage kann evtl. zusätzlich durch eine Dopplerauswertung die aktuelle Radialgeschwindigkeit und/oder besondere Zielkennungen ZB durch die Rotorflügel eines Hubschraubers erfassen und als erste Zielparameter ZP1 ausgeben. Weitere erste Zielparameter können beispielsweise von einem Zielobjekt emittierte und in der Sensoranordnung aufgenommene ESM-Signaturen als Radarsignale oder Lasersignale sein, wofür ein oder mehrere zusätzliche Sensoren S2 in der Sensoranordnung vorgesehen sein können.

Die in der Sensoranordnung SA generierten ersten Zielparameter ZP1 sind in gebräuchlicher Weise einer systemeigenen Auswerteeinheit SS zugeführt, welche in für den Benutzer nicht zugänglicher Weise eine detaillierte Verarbeitung der zugeführten Signale durchführt und Ausgangssignale ZA erzeugt, welche insbesondere eine visuelle Anzeige für den Benutzer ansteuern oder bei Erkennen einer Gefahrensituation evtl. auch automatisch Gegenmaßnahmen auslösen kann. Die Auswerteeinheit SS ist in verschiedenen Ausführungen bekannt und nicht Gegenstand der vorliegenden Erfindung.

Gemäß der Erfindung ist ein von der Auswerteeinheit SS unabhängiger Profilspeicher PS vorgesehen, in welchem benutzerdefinierbare Prüfprofile PP abspeicherbar sind. Zur Generierung und Änderung solcher Prüfprofile steht dem Benutzer vorteilhafterweise eine interaktive Bedieneinheit BE, vorzugsweise mit Bilddarstellung und mit Eingabegeräten zur Verfügung. Die Bedieneinheit dient auch dazu, gemäß einer vorteilhaften Weiterbildung die im Profilspeicher PS gespeicherten Prüfprofile PP einzeln und/oder gruppenweise zu aktivieren und deaktivieren.

Die Eingabe oder Änderung von Prüfprofilen über die Bedieneinheit BE kann beispielsweise in einer Metasprache, wie insbesondere HTML, erfolgen. In bevorzugter Ausführung kann für die Eingabe und/oder Änderung von Prüfprofilen eine Eingabemaske vorgesehen sein, in welcher bereits die verfügbaren Zielparameter berücksichtigt sind und welche Falscheingaben durch Plausibilitätskontrollen von vorn herein verhindert. In vorteilhafter Ausführung kann eine Zwischenspeicherung von Überwachungssituationen vorgesehen sein, so dass ein Benutzer ein neu definiertes Prüfprofil auf eine zuvor aufgetretene Situation nachträglich anwendbar und dadurch die angestrebte Brauchbarkeit des Prüfprofils überprüfen kann.

Eine als Trackdatenaggregator TA bezeichnete Einrichtung übernimmt parallel zu der Auswerteeinrichtung SA die ersten Zielparameter ZP1 von der Sensoranordnung SS. In dem Trackdatenaggregator TA werden vorteilhafterweise aus den ersten Zielparametern ZP1 weitere Zielparameter abgeleitet. Insbesondere kann in dem Trackdatenaggregator aus zeitlichen Folgen erster Zielparameter zu jeweils einem Ziel eine Ableitung unterschiedlicher weiterer Zielparameter, wie insbesondere die Geschwindigkeit eines Zielobjekts nach Betrag und Richtung, die Beschleunigung als Geschwindigkeitsänderung eines Zielobjekts nach Betrag und Richtung und/oder eine Richtungsänderung, welche implizit in den Beschleunigungsdaten als Querbeschleunigung enthalten ist, abgeleitet werden. Ferner können in dem Trackdatenaggregator aus den ersten Zielparametern statistische Werte, wie beispielsweise Mittelwerte oder Extremwerte, insbesondere für Geschwindigkeit, Beschleunigung, Krümmung von Zielobjektbahnen und/oder Flughöhen, abgeleitet werden. Die ersten Zielparameter und die weiteren, abgeleiteten Zielparameter können vorteilhafterweise über eine vorgebbare Zeit in dem Trackdatenaggregator zwischengespeichert werden. Die ersten Zielparameter und die in dem Trackdatenaggregator TA abgeleiteten weiteren Zielparameter werden als Zielparameter ZP vom Trackdatenaggregator an eine Prüfeinrichtung PE abgegeben.

In der Prüfeinrichtung PE werden die in dem Profilspeicher PS gespeicherten und gegebenenfalls vom Benutzer aktivierten Prüfprofile PP, welche jeweils wenigstens ein, vorzugsweise mehrere Prüfkriterien PK enthalten, auf die Zielparameter der einzelnen Zielobjekte angewandt. Insbesondere können die Prüfkriterien Schwellwerte für verschiedene Parameterwerte der Zielparameter ZP eines Zielobjekts enthalten und in der Prüfeinrichtung wird überprüft, ob ein Parameterwert eines Zielparameters aus dem Zielparametersatz ZP das für diesen Zielparameter in einem Prüfprofil definierte Prüfkriterium erfüllt oder nicht. Die Prüfkriterien können in anderer Ausführung auch die Übereinstimmung von Zielparametern mit gespeicherten Werten überprüfen, wofür beispielsweise eine Mehrzahl bekannter ESM-Signaturen gespeichert und eine oder mehrere der Signaturen in Prüfkriterien von Prüfprofilen definierbar sein können. Die Prüfprofile können vorteilhafterweise auch logische Verknüpfungen von Einzelkriterien nach Art Boole'scher Ausdrucksverknüpfungen enthalten.

Das von der Prüfeinheit PE zu einem bestimmten Zielobjekt und einem bestimmten Prüfprofil ausgegebene Prüfsignal PR kann in erster vorteilhafter Ausführung in einem binären Wert bestehen, welcher angibt, ob die Prüfkriterien des Prüfprofils durch das Zielobjekt, auf welches das Prüfprofil angewandt wurde, in ihrer Gesamtheit erfüllt sind oder nicht. Dabei kann die Gesamtheit der Prüfkriterien durch die Verknüpfung von auf einzelne Zielparameter gerichteten Kriterien durchaus auch den Fall umfassen, dass eine Übereinstimmung mit einem Prüfprofil auch als gegeben angesehen wird, wenn nicht alle auf Einzelparameter gerichtete Kriterien innerhalb des Prüfprofils erfüllt sind aber eine Übereinstimmung unter Berücksichtigung aller Prüfkriterien und deren Verknüpfungen gegeben ist. In anderer vorteilhafter Ausführung kann vorgesehen sein, dass das Prüfsignal PR zu einem auf ein Zielobjekt angewandten Prüfprofil differenzierter ausfallen und mehr als zwei Werte annehmen kann, so dass das Prüfsignal PR beispielsweise als eine Art Wahrscheinlichkeitswert dafür ausgelegt werden kann, mit welcher Wahrscheinlichkeit ein untersuchtes Zielobjekt mit einem darauf angewandten Prüfprofil übereinstimmt. Ein solches differenziertes Prüfsignal kann insbesondere als ein Zahlenwert erzeugt werden, der wiederum einen Schwellwertvergleich zur Ableitung eines binären Entscheidungswerts unterzogen werden kann, so dass als Prüfsignal ein binärer Wert über eine Erfüllung der Gesamtheit der Prüfkriterien und Verknüpfungen des Prüfprofils einerseits und ein Wahrscheinlichkeitswert andererseits parallel ausgebbar sind.

Die in der Prüfeinrichtung gewonnenen Prüfsignale PR können direkt als Zielinformation dem Benutzer zugeleitet und akustisch und/oder optisch angezeigt werden. Die Prüfsignale PR können ferner weiteren Signalverarbeitungsschritten, evtl. auch unter Einschluss der Ergebnisse der Auswerteeinrichtung SA, zugeleitet werden. Es kann auch eine parallele Ausgabe von binären und von mehrwertigen Prüfsignalen vorgesehen sein.

Zur Verknüpfung der einzelnen Komponenten bei der Generierung, Aktivierung und Abarbeitung der Prüfprofile ist in Fig. 1 pauschal eine Profilverwaltungseinheit PV eingezeichnet, welche beispielsweise die Eingabemaske für einen Maskeneingabe von Prüfprofilen enthalten oder eine Syntaxprüfung bei Eingabe von Prüfprofilen in einer Metasprache durchführen kann sowie eine gegebenenfalls erforderliche Umsetzung der gespeicherten Prüfprofile in Arbeitsanweisungen an die Prüfeinheit PE nach Art eines Parsers vornehmen kann. Auch die gegebenenfalls mögliche Aktivierung und Deaktivierung von einzelnen Prüfprofilen oder Gruppen von Prüfprofilen kann über die Profilverwaltungseinrichtung PV erfolgen. Einzelheiten über den möglichen Aufbau einer solchen Profilverwaltungseiririchtung sind dem IT-Fachmann geläufig und daher nicht weiter dargestellt.

Mehrere in einem Prüfprofil PP enthaltene Prüfkriterien PK bilden vorteilhafterweise eine Sequenz von nacheinander abzuarbeitenden Kriterien, wobei Zwischenergebnisse zu einzelnen Kriterien zwischengespeichert werden können, um in einem Prüfprofil definierte logische Verknüpfungen zwischen auf einzelne Zielparameter gerichteten Prüfkriterien durchzuführen. Teilresultate zu einzelnen Prüfkriterien können auch kumulativ, gegebenenfalls mit unterschiedlicher Gewichtung, zu einem Prüfwert nach Art des genannten Wahrscheinlichkeitswerts als Prüfsignal zusammengefasst werden.

In vorteilhafter Ausführung kann vorgesehen sein, dass einzelne Prüfprofile oder Gruppen von Prüfprofilen wenigstens ein für die Bearbeitung des Profils hierarchisch den anderen Prüfkriterien übergeordnetes Prüfkriterium, nachfolgend als Eingangskriterium bezeichnet, enthalten. Ein solches Eingangskriterium wird bei der Anwendung eines Profils auf ein Zielobjekt zuerst überprüft. Vorzugsweise werden bei Nichterfüllen des dann ein Ausschlusskriterium bildenden Eingangskriteriums die weiteren Prüfkriterien des Prüfprofils nicht mehr in der Prüfeinrichtung abgearbeitet, so dass sich eine erhebliche Reduzierung des Bearbeitungsvolumens in der Prüfeinheit ergibt. Hierdurch können bei gegebener Leistungsfähigkeit der Prüfeinheit typischerweise mehr Prüfprofile bearbeitet werden.

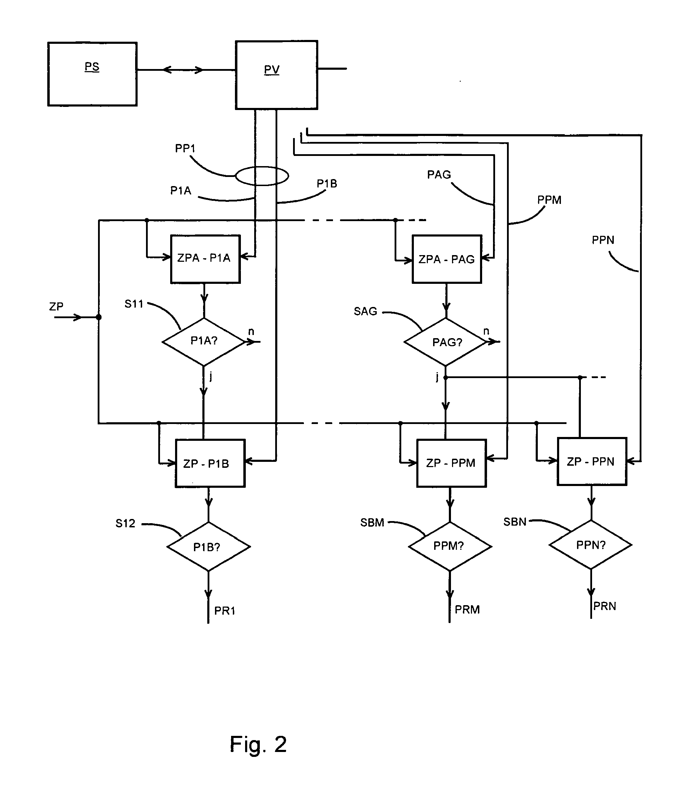

Fig. 2 zeigt ein Schema einer solchen Bearbeitung, wonach beispielsweise für ein Prüfprofil PP1 ein Eingangskriterium P1A als Eingangskriterium und diesem hierarchisch nachrangige Prüfkriterien P1 B definiert und über die Profilverwaltung PV aus dem Profilspeicher PS der Prüfeinheit PE zugeleitet sind. In der Prüfeinheit PE wird in einem ersten Schritt S11 geprüft, ob das Eingangskriterium P1A durch einen von diesem betroffenen Zielparameter ZPA aus dem Zielparametersatz ZP eines Zielobjekts erfüllt ist oder nicht. Bei Nichterfüllen wird die Anwendung des Prüfprofils abgebrochen und eine neue Prüfaufgabe begonnen. Bei Erfüllen des Eingangskriteriums durch den betroffenen Zielparameter ZPA wird die Abarbeitung des Prüfprofils mit dessen gesamtem Kriteriensatz P1 B eingeleitet, was die Überprüfung einzelner Kriterien mit einzelnen Zielparametern ZPB aus dem Zielparametersatz ZP eines Zielobjektes und gegebenenfalls logische Verknüpfungen von Prüfkriterien beinhaltet und als Ergebnis eines gegebenenfalls mehrere Teilschritte enthaltenden Prüfschritts S12ein binäres und/oder mehrwertiges Prüfsignal PR1 liefert. Das Eingangskriterium P1A kann auch mehrere Teilkriterien für gegebenenfalls verschiedene Zielparameter umfassen. Beispielsweise kann ein Eingangskriterium eines auf Hubschrauber als Zielobjekte abgestimmten Prüfprofils überprüfen, ob die Maximalgeschwindigkeit oder die Maximalhöhe des Zielobjekts unterhalb von für Hubschrauber möglichen Maximalwerten liegen. Zielobjekte mit höherer Maximalgeschwindigkeit oder Maximalhöhe werden von der weiteren Anwendung des Prüfprofils ausgeschlossen.

Ein Eingangskriterium kann auch für mehrere Prüfprofile gemeinsam gegeben sein, wie in der rechten Hälfte von Fig. 2 dargestellt ist. Ein für mehrere Prüfprofile PPM, PPN gemeinsames Ausschlusskriterium PAG wird in einem ersten Schritt SAG in der Prüfeinrichtung auf Übereinstimmung mit einem von dem Ausschlusskriterium betroffenen Zielparameter ZPA überprüft. Bei nicht gegebener Übereinstimmung wird keines der Prüfprofile PPM, PPN weiter bearbeitet. Bei im Schritt SAG festgestellter Übereinstimmung werden die Prüfprofile PPM, PPN der Prüfprofilgruppe in weiteren Bearbeitungsschritten SBM, SBN in der Prüfeinrichtung abgearbeitet und die jeweils betroffenen Zielparameter eines Zielobjekts mit den betroffenen Zielparameterwerten verglichen. Zu jedem Prüfprofil der Gruppe wird ein eigenes Prüfsignal PRM, PRN erzeugt.

Als ein Eingangskriterium PAG für eine Gruppe von Prüfprofilen kann beispielsweise wieder das bereits erwähnte Ausschlusskriterium für eine Gruppe von auf Hubschrauber abgestimmten Prüfprofilen gewählt werden. In anderem Beispiel kann ein Eingangskriterium für eine Gruppe von Prüfprofilen allgemeiner überprüfen, ob es sich bei dem Zielobjekt um ein fliegendes Zielobjekt oder um ein landfahrendes oder schwimmendes Zielobjekt handelt und nur für fliegende Zielobjekte die Bearbeitung der Prüfprofile fortsetzen.

Die einzelnen Prüfsignale PR1, PRM, PRN können in der Reihenfolge ihrer Erzeugung in der Prüfeinheit von dieser ausgegeben oder nach Zielobjekten zusammengefasst und gegebenenfalls auch noch miteinander verknüpft werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. System zur Überwachung von Zielobjekten (ZO) innerhalb eines Überwachungsbereichs mittels einer Sensoranordnung (SA), welche zur Gewinnung von ersten Zielparametern (ZP1) ausgebildet ist, mit einer die Zielparameter auswertenden Auswerteeinrichtung, welche anhand gespeicherter Auswertevorschriften Ausgangssignale zur Ausgabe an einen Benutzer erzeugt, wobei die in der Auswerteeinrichtung für die Zielparameter vordefinierten Auswertevorschriften durch den Benutzer nicht veränderbar sind, **dadurch gekennzeichnet, dass** ein zusätzlicher, von der Auswerteeinrichtung unabhängiger Profilspeicher (PS) vorhanden ist, in welchem benutzerdefinierbare Prüfprofile (PP) abspeicherbar sind, dass die Prüfprofile Prüfkriterien (PK) für wenigstens einen Zielparameter (ZP) enthalten und dass eine Prüfeinrichtung (PE) vorgesehen ist, welche die Prüfkriterien der Prüfprofile mit dem wenigstens einen Zielparameter vergleicht und in Abhängigkeit von den Vergleichsergebnissen ein Prüfsignal (PR1, PRM, PRN) erzeugt.

2. System nach Anspruch 1 oder 2, **dadurch gekennzeichnet, dass** ein Trackdatenaggregator (TA) zur Ableitung von weiteren Zielparametern aus einer zeitlichen Folge von ersten Zielparametern (ZP1) zu Zielobjekten (ZO) ausgebildet ist.

3. System nach Anspruch 2, **dadurch gekennzeichnet, dass** die weiteren Zielparameter einen oder mehrere Extremwerte oder Mittelwerte einer zeitlichen Folge von Zielparametern umfassen.

4. System nach Anspruch 2 oder 3, **dadurch gekennzeichnet, dass** die weiteren Zielparameter einen oder mehrere Größen von Geschwindigkeit, Beschleunigung oder Richtungsänderung eines bewegten Zielobjekts umfassen.

5. System nach einem der Ansprüche 1 bis 4, **dadurch gekennzeichnet, dass** die Prüfeinrichtung (PE) mehrere in einem Prüfprofil (PP) enthaltene Prüfkriterien (PK) sequentiell in einer durch das Prüfprofil vorbestimmten Reihenfolge abarbeitet.

6. System nach Anspruch 5, **dadurch gekennzeichnet, dass** ein Prüfprofil mit mehreren Prüfkriterien wenigstens ein Eingangskriterium (PA1, PAG) als in der Reihenfolge der Abarbeitung erstes Prüfkriterium enthält und in der Reihenfolge nachrangige Prüfkriterien nur bei Erfüllen des Ausschlusskriteriums abgearbeitet werden.

7. System nach einem der Ansprüche 1 bis 6, **dadurch gekennzeichnet, dass** die Prüfkriterien (PK) Schwellwerte für Zielparameter enthalten.

8. System nach einem der Ansprüche 1 bis 7, **dadurch gekennzeichnet, dass** die Sensoranordnung (SA) den Überwachungsbereich zyklisch überstreicht.

9. System nach einem der Ansprüche 1 bis 8, **dadurch gekennzeichnet, dass** die Sensoranordnung (SA) eine Radaranlage enthält.

10. System nach einem der Ansprüche 1 bis 9, **dadurch gekennzeichnet, dass** die Prüfprofile einzeln aktivierbar und deaktivierbar sind und die Prüfeinrichtung Vergleiche der Zielparameter nur mit Prüfkriterien aktivierter Prüfprofile durchführt.

11. Verfahren zur Überwachung von Zielobjekten innerhalb eines Überwachungsbereichs, wobei mittels einer Sensoranordnung (SA) erste Zielparameter (ZP1) von Zielobjekten (ZO) gewonnen und nach Auswertung der Zielparameter in einer Auswerteeinrichtung mit vordefinierten, durch den Benutzer nicht veränderbaren Auswertevorschriften Ausgangssignale zur Ausgabe an einen Benutzer erzeugt werden, **dadurch gekennzeichnet, dass** benutzerdefinierbar Prüfprofile (PP) erzeugt und in einem von der Auswerteeinrichtung unabhängigen Profilspeicher (PS) abgelegt werden, wobei die Prüfprofile (PP) ein oder mehrere Prüfkriterien (PK) für Zielparameter (ZP) enthalten, dass die Prüfkriterien (PK) in einer Prüfeinrichtung (PE) mit den Zielparametern (ZP) verglichen und aus dem Vergleich Prüfsignale (PR) abgeleitet und in Abhängigkeit von diesen Prüfsignale für eine Ausgabeeinrichtung erzeugt werden.

12. Verfahren nach Anspruch 11, **dadurch gekennzeichnet, dass** aus zeitlichen Folgen ersten Zielparameter zu demselben Zielobjekt wenigstens ein weiterer Zielparameter abgeleitet wird.

13. Verfahren nach Anspruch 12, **dadurch gekennzeichnet, dass** als weiterer Zielparameter ein Extremwert und/oder Mittelwert abgeleitet wird.

14. Verfahren nach Anspruch 12 oder 13, **dadurch gekennzeichnet, dass** als weitere Zielparameter eine oder mehrere Größen von Geschwindigkeit, Beschleunigung oder Richtungsänderung eines bewegten Zielobjekts bestimmt werden.

15. Verfahren nach einem der Ansprüche 11 bis 14, **dadurch gekennzeichnet, dass** in wenigstens einem Prüfprofil mit mehreren Prüfkriterien ein Eingangskriterium definiert und dieses in der Prüfeinrichtung zuerst bearbeitet wird und dass die übrigen Prüfkriterien nur bei Erfüllen des Eingangskriteriums bearbeitet werden.
